# EUROPÄISCHE PATENTSCHRIFT

(11) **EP 1 319 303 B1**
(45) Veröffentlichungstag und Bekanntmachung des Hinweises auf die Patenterteilung: **20.07.2005**
(21) Anmeldenummer: 01976023.0
(22) Anmeldetag: 07.09.2001
(51) Int. Cl.: H04M 1/02, H04M 1/11

(54) **VORRICHTUNG ZUR BEFESTIGUNG EINES DRAHTLOSEN KOMMUNIKATIONSGERÄT**
DEVICE FOR FASTENING A CORDLESS COMMUNICATIONS DEVICE
DISPOSITIF POUR FIXER UN APPAREIL DE COMMUNICATION SANS FIL

(30) Priorität: 22.09.2000 DE 10047132
(43) Veröffentlichungstag der Anmeldung: 18.06.2003
(73) Patentinhaber: SIEMENS AKTIENGESELLSCHAFT, 80333 München (DE)
(72) Erfinder: EBERLE, Erwin, 82140 Olching (DE); HERZER, Joachim, 80636 München (DE)
(86) Internationale Anmeldenummer: PCT/DE2001/003461
(87) Internationale Veröffentlichungsnummer: WO 2002/025905

(56) Entgegenhaltungen:
- DE-U- 29 601 412
- US-A- 5 087 004
- US-A- 5 807 012

## Beschreibung

Geräte der drahtlosen Kommunikation, z.B. DECT-Basisstationen, erfordern einen Anschluss mehrerer signalführender und stromzuführender Leitungen. Eine Wandmontage derartiger Geräte wird daher gewöhnlich erst nach Abschluss der Verdrahtungsarbeiten vorgenommen. Um für Wartungszwecke einen einfachen Zugang auf die Anschlussstellen der Leitungen zu erhalten, ist die Befestigung dieser Geräte an einer Wand oftmals als leicht lösbar gestaltet. Viele Gehäuse derartiger Geräte weisen zu diesem Zweck an ihrer Rückseite Vertiefungen oder Laschen zum Einhängen in vormontierten Trägerelementen auf. Derartige Trägerelemente sind im einfachsten Fall Schrauben; die in die Wand geschraubt sind und einen Überstand aufweisen.

Um aufputzgeführte Leitungen (auch Aufputzleitungen genannt) geordneter an Anschlüsse am Gerätgehäuse heranzuführen, sind auch Trägerelemente in Form von Montageschienen gebräuchlich, die nach ihrer Wandmontage ebenfalls ein Einhängen des Gehäuses erlauben und darüber hinaus zum Gerät geführte Aufputzgleitungen fixieren.

Geräte der drahtlosen Kommunikation verfügen über eine Besonderheit, nämlich eine Antenne, die eine spezifische Abstrahlcharakteristik und Vorzugsrichtung des Wellenvektors aufweist. Nach der Montage solcher Geräte zeigt sich oft, dass ein Verdrehen des Geräts an der Wand erwünscht wäre, da sich mit einer geänderten Winkelposition der Antenne zur Senkrechten eine Verbesserung in der Empfangs- und Sendequalität einstellt.

Aus der US-amerikanischen Patentschrift US 5 807 012 ist eine Montageanordnung bekannt, welche mehrere im wesentlichen hohlförmige Zylinder-Formteile aufweist, bei denen Aussparungen in einer axialen Richtung des Formteils vorgesehen sind. Die Formteile sind an einem Gerät angebracht und konstruktiv so ausgebildet, dass ein Einrasten des Geräts in ein Trägerelement ermöglicht wird. Diese Montageanordnung zeigt zwar den Vorteil eines einfachen Einrastens, jedoch ist aufgrund der starren Winkelposition nach dem Einschrauben des Trägerelements kein Verdrehen bzw. Justieren des eingerasteten Geräts möglich.

Diese Justierung der Gerätelage erweist sich mit den beschriebenen Montageanordnungen als aufwendig, da hier eine Korrektur des Drehwinkels an der Wand nur mit einer erneuten Montage der entsprechenden Trägerelemente möglich ist.

Aufgabe der Erfindung ist es, eine Vorrichtung zur Befestigung eines Geräts der drahtlosen Kommunikation anzugeben, die nach Montage des Trägerelements ein Halten eines Gerätgehäuses unter mehreren wählbaren Drehwinkeln in der Wandebene erlaubt.

Diese Aufgabe wird erfindungsgemäß durch die kennzeichnenden Merkmale des Patentanspruchs 1 gelöst.

Bei der erfindungsgemäßen Vorrichtung ist ein Trägerelement für eine Wandmontage vorgesehen, das ein zentrales rohrförmiges Steckelement aufweist, an dem das Gehäuse - durch ein zum Steckelement formschlüssigen, an der Rückseite des Gehäuses befindlichen Gegensteckelement - in mehreren wählbaren Winkellagen zur Wand aufsteckbar ist. Ein Verstellen der Winkellage zum Zwecke einer Verbesserung der Send- und Empfangsqualität ist somit vorteilhaft ohne eine erneute Montage des Trägerelements möglich.

Vorteilhafte Weiterbildungen der Erfindung sind in den Unteransprüchen angegeben.

Eine vorteilhafte Weiterbildung (Anspruch 2) sieht vor, dass das Steckelement und das Trägerelement einteilig ausgestaltet ist, was insbesondere für eine Fertigung im Spritzgussverfahren eine vorteilhafte Reduzierung auf einen Fertigungsschritt bedeutet. In gleicher Weise (Anspruch 3) ist die einteilige Ausgestaltung des Gehäusebodens des Geräts als Gegensteckelement vorteilhaft.

Durch die Ausgestaltung (Anspruch 4) des Trägerelements mit Durchlassöffnungen, die über Schraublöchern für Befestigungsschrauben einer Unterputzdose positionierbar sind, ist eine Montage auf einer Unterputzdose möglich. Dies hat den Vorteil, dass zur Montage des Trägerelements keine Wandbohrungen notwendig sind. Weiterhin können (Anspruch 5) durch eine durchgehend hohle Ausbildung sowohl von Steckelement als auch Gegensteckelement Leitungen unsichtbar von der Unterputzdose in das Gerät geführt werden.

Das Steckelement ist vorteilhaft mit Führungselementen versehen, die ein unbeabsichtigtes Verdrehen des Gegensteckelements am Steckelement verhindern sollen. Sind diese Führungselemente des Steckelements (Anspruch 6) als Schlitze in der Rohrwand des rohrförmigen Steckelements ausgebildet, ist (Anspruch 7) eine Zuführung von Aufputzleitungen in das Innere des Steckelements und dadurch zu dem Gehäuseboden möglich, womit eine saubere Kabelführung auch von Aufputzleitungen erfolgt.

Anhand der Zeichnung wird im weiteren ein Ausführungsbeispiel der Erfindung näher erläutert.

Dabei zeigen
Fig 1A eine schematische Vorderansicht eines Trägerelements und eines Wandgehäuses einer Funkbasisstation
Fig 1B eine schematische Rückansicht eines Trägerelements und eines Wandgehäuses einer Funkbasisstation
Fig 2 ein schematisches Schnittbild einer Unterputzdose mit einem montierten Trägerelement und einem auf dieses aufsetzbaren Wandgehäuses

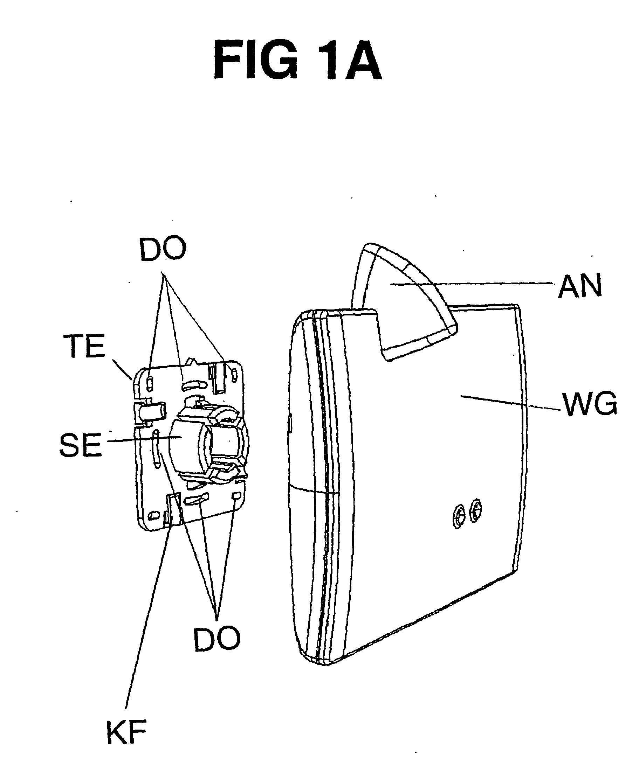

In Fig 1A ist das Wandgehäuse WG einer (DECT-) Basisstation sowie dessen zugehöriges Trägerelement TE in Vorderansicht dargestellt. Das Wandgehäuse WG besitzt eine Formausbildung zur Aufnahme eine Antenne AN. Das Trägerelement TE weist ein zentrales Steckelement SE auf, das zylindermantelförmig ausgebildet ist. Am Trägerelement TE sind Durchführungsöffnungen DO vorhanden, von denen äußere der herkömmlichen Schraubenmontage an einer Wand dienen, während innere als kreissegmentförmige Schlitze ausgebildet sind und zur Montage des Trägerelements TE auf einer Unterputzdose (nicht dargestellt) unter Verwendung der dort vorhandenen Befestigungsschrauben dienen. Das Trägerelement TE weist eine Kabelfixierung KF auf, die eine Fixierung von Aufputzleitungen, die von der Wandoberfläche zu Anschlüssen im Wandgehäuse WG geführt werden, mittels eines Kabelbinders erlaubt.

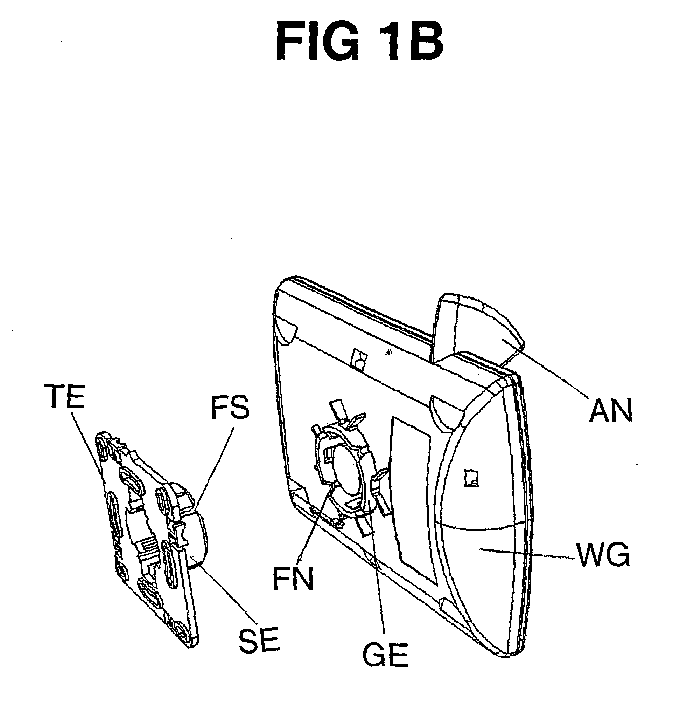

Fig 1B zeigt das Wandgehäuse WG mit der zugehörigen Antenne AN und dem Trägerelement TE in Rückenansicht. In dieser Ansicht ist das Gegensteckelement GE als Teil des Wandgehäuses WG erkennbar, das, geführt von vier Führungsnasen FN in formkorrespondierenden Führungsschlitzen FS des Steckelements SE, in das zentrale Steckelement SE einsteckbar ist. Der kreisförmige Querschnitt des Steckelements SE bzw. Gegensteckelementes GE, sowie vier paarweise diametral gegenüberliegende Führungsnasen FN bzw. Führungsschlitze FS, wobei ihre diametralen Achsen einen rechten Winkel bilden, gestattet ein Aufstecken des Wandgehäuses WG am Trägerelement TE in vier Drehwinkelpositionen in der Wandebene in Schritten von 90°.

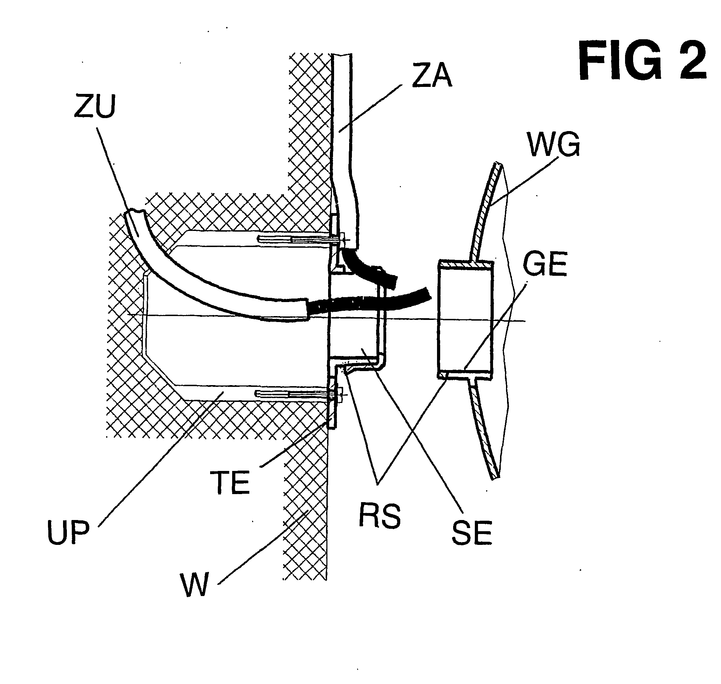

In Fig 2 ist ein Schnitt durch eine in der Wand W eingesenkte Unterputzdose UP und durch ein darüber mit Schrauben befestigtes Trägerelement TE dargestellt. Ebenso ist schnittbildlich das Wandgehäuse WG mit seinem integrierten Gegensteckelement GE dargestellt. Eine Unterputzleitung ZU in der Unterputzdose UP wird durch einen axial verlaufenden Hohlraum des Steckelements SE sowie des Gegensteckelements GE zu den Anschlüssen (nicht dargestellt) im Wandgehäuses WG geführt.

Eine Unterputzleitung ZU in der Unterputzdose UP wird durch den axial verlaufenden Hohlraum des Steckelements SE sowie des Gegensteckelements GE mit Hilfe von Führungsschlitze FS (nicht dargestellt) zu Anschlüssen (nicht dargestellt) in einer Vertiefung (nicht dargestellt) an der Rückseite des Wandgehäuses WG geführt. Die Aufputzleitungen ZA werden dabei durch die Führungsschlitze FS (nicht dargestellt) in die axial verlaufenden Hohlräume des Steckelements sowie des Gegensteckelements GE hineingeführt und in Höhe der Anschlüsse (nicht dargestellt) wieder herausgeführt.

Eine Raststelle RS besteht aus einem Rastriegel am Steckelement SE sowie einer Rastnut am Gegensteckelement GE. Beim Einstecken des Gegensteckelements GE in das Steckelement SE rastet das Gegensteckelement GE am Steckelement SE an einem vorgesehenen Montageendpunkt, der Raststelle RS, ein, womit ein Abziehen des Wandgeräts WG unterbunden wird. Durch mechanischen Einwirkung auf den Rastriegel am Trägerelement TE, z.B. mittels eines Schraubendrehers, kann diese Abziehsperre wieder gelöst und das Wandgerät WG vom Trägerelement TE abgezogen werden.

## Patentansprüche

1. Vorrichtung zur Befestigung eines der drahtlosen Kommunikation dienenden Geräts an einer Wandfläche (W), mit einem an der Wandfläche (W) vormontierbaren Trägerelement (TE),
**dadurch gekennzeichnet,**
**dass** das Trägerelement (TE) ein zentrales mit seiner axialen Richtung zum Trägerelement (TE) weisendes rohrförmiges Steckelement (SE) zum Aufstecken und Verrasten eines mit dem Gehäuseboden des Geräts verbundenen Gegensteckelements (GE) aufweist,
**dass** das Steckelement (SE) zumindest in Teilbereichen formschlüssig zu dem sich über und/oder in das Steckelement (SE) erstreckenden Gegensteckelement (GE) ausgebildet ist,
**dass** am Steckelement (SE) und/oder am Gegensteckelement (GE) axial verlaufende, eine gewählte Drehwinkelposition zwischen Steckelement (SE) und Gegensteckelement (GE) haltende, Führungselemente angeordnet sind.

2. Anordnung nach Anspruch 1,
**dadurch gekennzeichnet,**
**dass** wenigstens eine Einrastanordnung (RS) das Gegensteckelement (GE) gegen ein Abziehen vom Steckelement (SE) versperrt.

3. Anordnung nach einem der vorhergehenden Ansprüche,
**dadurch gekennzeichnet,**
**dass** das Trägerelement (TE) mit dem Steckelement (SE) einstückig ausgebildet ist.

4. Anordnung nach einem der vorhergehenden Ansprüche,
**dadurch gekennzeichnet,**
**dass** ein Teilbereich des Gehäusebodens als Gegensteckelement (GE) ausgebildet ist.

5. Anordnung nach einem der vorhergehenden Ansprüche,
**dadurch gekennzeichnet,**
**dass** für eine Befestigung des Trägerelements (TE) auf einer Unterputzdose (UP) Durchlassöffnungen (DO) für Befestigungsschrauben der Unterputzdose (UP) vorhanden sind.

6. Anordnung nach einem der vorhergehenden Ansprüche,
**dadurch gekennzeichnet,**
**dass** das Steckelement (SE) und das Gegensteckelement (GE) im Bereich ihrer Achsen durchgehend hohl ausgebildet sind und zur Aufnahme einer aus dem Wandinneren zu einer Anschlussstelle des Geräts gerichteten Leitung (ZU) vorgesehen sind.

7. Anordnung nach einem der vorhergehenden Ansprüche,
**dadurch gekennzeichnet,**
**dass** die Führungselemente axial im Mantelbereich des Steckelements (SE) verlaufende Schlitze (FS) sind.

8. Anordnung nach Anspruch 7,
**dadurch gekennzeichnet,**
**dass** Oberflächenkabel (ZA) durch die Schlitze (FS) zu Anschlüssen des Geräts führbar sind.

9. Anordnung nach einem der Ansprüche 6 oder 7,
**dadurch gekennzeichnet,**
**dass** am Gegensteckelement (GE) in den Schlitzen (FS) verschiebbare Nasen (FN) als Führungselemente angeordnet sind.

## Claims

1. Device for fixing a cordless communication device to a wall surface (W), having a supporting element (TE) which can be pre-mounted on the wall surface (W),
**characterised in that**
the supporting element (TE) has a central tubular plug element (SE) which points with its axial direction towards the supporting element (TE) for plugging in and locking in place a mating plug element (GE) that is joined to the base of the device housing,
the plug element (SE) is embodied such that it positively engages, at least in partial areas, with the mating plug element (GE) extending over and/or into the plug element (SE),
axially extending guide elements which maintain a selected rotational angle position between plug element (SE) and mating plug element (GE) are arranged on the plug element (SE) and/or on the mating plug element (GE).

2. Arrangement according to claim 1,
**characterised in that**
at least one locking arrangement (RS) prevents the mating plug element (GE) from being removed from the plug element (SE).

3. Arrangement according to one of the preceding claims,
**characterised in that**
the supporting element (TE) is embodied in one piece with the plug element (SE).

4. Arrangement according to one of the preceding claims,
**characterised in that**
a partial area of the base of the housing is embodied as a mating plug element (GE).

5. Arrangement according to one of the preceding claims,
**characterised in that**
continuous openings (DO) for fixing screws of the flush mounting box (UP) are provided for fixing the supporting element (TE) on a flush mounting box (UP).

6. Arrangement according to one of the preceding claims,
**characterised in that**
the plug element (SE) and the mating plug element (GE) are embodied so as to be continuously hollow in the area of their axes and are provided for accepting a lead (ZU) routed from the interior of the wall to a connection point on the device.

7. Arrangement according to one of the preceding claims,
**characterised in that**
the guide elements are slots (FS) extending axially in the area of the sleeve of the plug element (SE).

8. Arrangement according to claim 7,
**characterised in that**
surface cables (ZA) can be routed through the slots (FS) to connections on the device.

9. Arrangement according to one of the claims 6 or 7,
**characterised in that**
lugs (FN) which are movable in the slots (FS) are arranged on the mating plug element (GE) as guide elements.

## Revendications

1. Dispositif pour fixer un appareil servant à la communication sans fil sur une surface murale (W), muni d'un élément porteur (TE) pouvant être préinstallé sur la surface murale (W),
**caractérisé en ce**
**que** l'élément porteur (TE) présente un élément central enfichable (SE), en forme de tube, orienté vers l'élément porteur (TE) avec sa direction axiale, destiné à enficher et encliqueter un contre-élément enfichable (GE) raccordé au fond du boîtier de l'appareil,
**que** l'élément enfichable (SE) est exécuté, tout du moins dans des zones partielles, par conjugaison de forme par rapport au contre-élément enfichable (GE) s'étendant sur et/ou dans l'élément enfichable (SE),
**que** des éléments de guidage s'étendant axialement, maintenant une position angulaire rotative sélectionnée entre l'élément enfichable (SE) et le contre-élément (GE), sont disposés sur l'élément enfichable (SE) et/ou sur le contre-élément enfichable (GE).

2. Dispositif selon la revendication 1,
**caractérisé en ce**
**qu'**au moins un dispositif d'encliquetage (RS) bloque le contre-élément enfichable (GE) pour empêcher un retrait de l'élément enfichable (SE).

3. Dispositif selon l'une quelconque des revendications précédentes,
**caractérisé en ce**
**que** l'élément porteur (TE) est exécuté d'une seule pièce avec l'élément enfichable (SE).

4. Dispositif selon l'une quelconque des revendications précédentes,
**caractérisé en ce**
**qu'**une zone partielle du fond du boîtier est exécutée comme contre-élément enfichable (GE).

5. Dispositif selon l'une quelconque des revendications précédentes,
**caractérisé en ce**
**que** des ouvertures de passage (DO) sont présentes pour des vis de fixation de la boîte d'encastrement sous crépi (UP) pour une fixation de l'élément porteur (TE) sur une boîte d'encastrement sous crépi (UP).

6. Dispositif selon l'une quelconque des revendications précédentes,
**caractérisé en ce**
**que** l'élément enfichable (SE) et le contre-élément enfichable (GE) sont exécutés de manière creuse continue dans la partie de leurs axes et qu'ils sont prévus pour loger une ligne (ZU) dirigée hors de l'intérieur du mur vers un endroit de raccordement de l'appareil.

7. Dispositif selon l'une quelconque des revendication précédentes,
**caractérisé en ce**
**que** les éléments de guidage sont des fentes (FS) s'étendant axialement dans la partie d'enveloppe de l'élément enfichable (SE).

8. Dispositif selon la revendication 7,
**caractérisé en ce**
**que** le câble de surface (ZA) peut être guidé à travers les fentes (FS) vers des raccords de l'appareil.

9. Dispositif selon l'une quelconque des revendications 6 ou 7,
**caractérisé en ce**
**que** des ergots (FN) déplaçables dans les fentes (FS) sont disposés comme éléments de guidage sur le contre-élément enfichable (GE).
